# EUROPEAN PATENT SPECIFICATION

(11) **EP 0 473 438 B1**
(45) Date of publication and mention of the grant of the patent: **24.04.1996**
(21) Application number: 91307930.7
(22) Date of filing: 29.08.1991
(51) Int. Cl.: A01G 13/02

(54) **Promoting germination of seed**
Keimungsverbesserung
Amélioration de la germination

(30) Priority: 30.08.1990 GB 9018878
(43) Date of publication of application: 04.03.1992
(73) Proprietor: TILDENET LIMITED, Bristol BS3 2HA (GB)
(72) Inventor: Downey, Bernard Thomas Joseph, Bath BA2 6HD (GB)
(74) Representative: Brown, David Leslie

(56) References cited:
- AT-B- 341 818
- AU-B- 507 525
- BE-A- 858 980
- US-A- 3 181 273
- US-A- 3 848 359

## Description

The present invention relates to a method for promoting the germination of seed, particularly grass seed.

It is known to promote the germination of grass seed, e.g. on lawns, golf courses, tennis courts, sports fields etc., by laying hessian fabric or plastics sheeting over the sown seed. Such methods can result in irregular growth of the grass, however, and are unsuitable on hard compacted earth such as goalmouth areas of football pitches or crease areas of cricket wickets. In the case of plastics sheeting, the cover may need to be lifted for watering, causing undesirable extra work for the ground staff.

AT-B-341818, for example, discloses the use of perforated plastic films, foamed plastics and paper/fleeces such as tissue paper, to promote the germination of grass seed. It is reported that a polyethylene lattice film having a mesh density of 50% , overlain onto sown grass seed during the period between sowing and first lawn cutting, reduced the lawn growth time by one week compared with uncovered seed.

US-A-3848359 discloses in general terms the use of entirely water-impermeable foraminous sheets as permanent ground protectors, and more specifically the use of sheets including both water-impermeable yarns and water-permeable biodegradable paper strips in assisting the growth of seeds. In particular, the paper strips have grass seeds attached to their under sides by a nutrient glue, so that when the sheet is laid on the ground and exposed to water, the paper strips degenerate, the seeds germinate and the water-impermeable yarns sink into the plant roots and anchor the soil.

The present invention aims to provide an improved method for promoting germination.

According to the invention, there is provided a method for promoting the germination of seed, particularly grass seed, which comprises covering the sown seed with a foraminous germination-promoting sheet formed of intertwined strips and/or fibres of substantially water-impermeable material and having a mesh density greater than about 65%.

The term "mesh density" as used herein refers to the proportion of the sheet area which is occupied by the strips and/or fibres. The mesh density of the sheet is suitably between about 70% and about 90%, preferably between about 80% and about 90% and more preferably about 85%.

The method is suitably used outdoors, the sheet being preferably laid on the earth after sowing the seed, and the whole arrangement then exposed to natural sunlight, temperature and rainfall, optionally enhanced artificially as desired (e.g. by irrigation).

The dimensions of the foramina of the sheet are suitably chosen to enable a proportion of any water falling on the sheet to be retained in the foramina. Typically, the dimensions of the foramina are up to about 5mm, suitably between about 1 and about 3mm. At least some of the foramina may suitably be generally elongate or optionally rectangular, having a relatively long dimension and a relatively short dimension, such foramina being conveniently provided in a regular arrangement according to the manner of construction of the sheet. For example, the sheet can suitably be constructed from a parallel array of "backbones" of knitted fibres, through and between which are intertwined strips of the required numbers and density to provide the desired mesh density.

The water-impermeable material from which the strips and/or fibres are formed is preferably a plastic such as high density polyethylene. The colour may be chosen to provide the desired degree of gain and loss of solar heat. Black has been found to be suitable.

Without wishing to be bound by theory, it is believed that the sheet causes a "greenhouse effect" between it and the ground, providing in use an optimum balance of temperature, light and moisture in the vicinity of the seed.

In addition to promotion of germination, it has been found that the method of the invention can result in more uniform grass growth and improved matting of the resulting grass. This in turn can result in better quality grass, and more easy maintenance of the grass, than has been possible hitherto.

Sheets of the type defined above can have the additional effect of shielding young plants from the effects of frost and heat, so that the method of the present invention can readily be employed with advantage outside normal grass growing seasons.

For ease of understanding of the invention, an embodiment will now be described by way of example and without limitation, with reference to the accompanying drawings, in which:

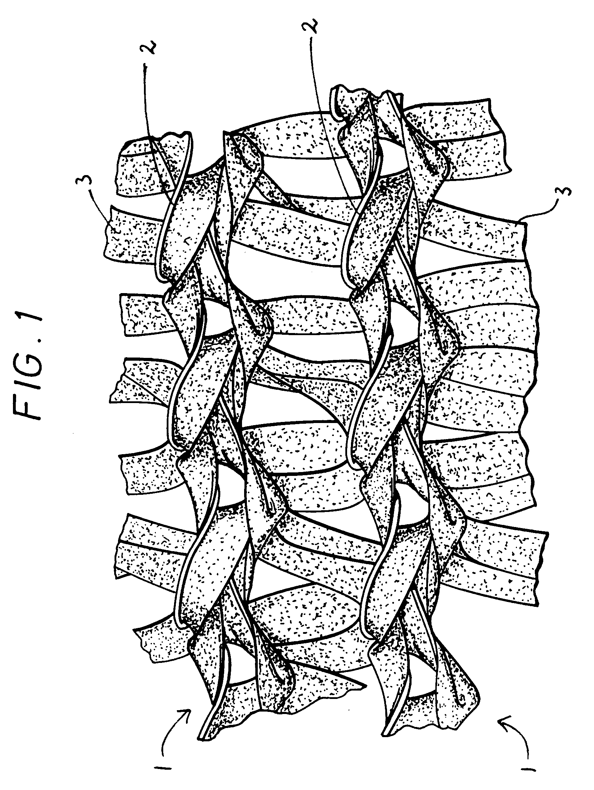

Fig. 1 shows in enlarged scale (approximately x 11) from one side part of a foraminous germination-promoting sheet;

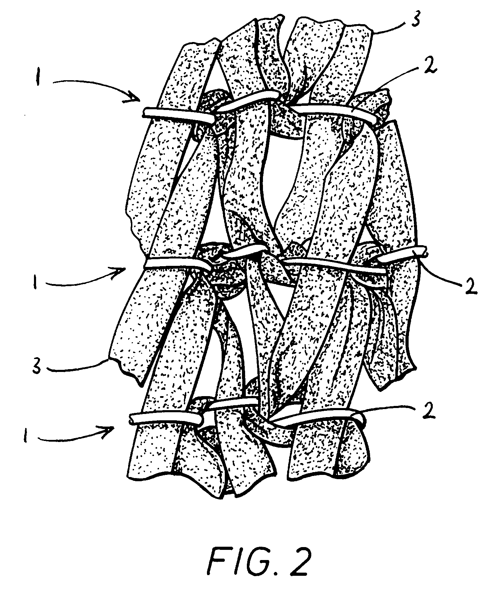

Fig. 2 shows in enlarged scale (approximately x 11) part of the sheet of Fig. 1 from the other side; and

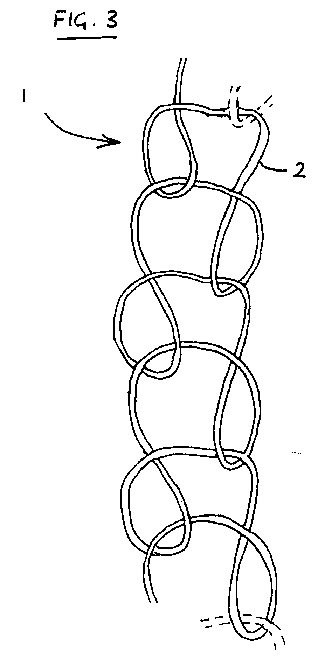

Fig. 3 shows in enlarged scale (approximately x 20) the knitted fibre backbone of the sheet of Figs. 1 and 2 in which the strips are intertwined, but with the strips omitted for clarity.

Referring to the Figures, the sheet illustrated is in the form of a net comprising a parallel array of backbones 1 each formed of a polyethylene fibre 2, through and between which backbones there are intertwined polyethylene strips 3 so that the strips bridge between neighbouring backbones 1 of the array. The backbones 1 are knitted in a lockstitch pattern. The result is an arrangement of backbones held together by bridging strips projecting along the length of the backbones, each bridging strip being spaced slightly apart from its neighbouring strip to leave foramina in the net some of which are longer in the direction transverse to the backbones than in the direction along the length of the backbones. By varying the number and/or thickness of strips and/or the spacing of the backbones with respect to each other, the mesh density of the sheet can be considerably varied.

The germination-promoting properties of the illustrated sheet were tested as follows:

### Nature of the Sheet

The sheet actually used was a commercially available black, ultra-violet inhibited, high density polyethylene net of knitted lockstitch construction and having a mesh density of 85% marketed by Tildenet Limited, Bristol, England under the trade mark TILDENET GPC (formerly TILDENET LS 85%).

TILDENET GPC has a unit weight of 0.13 kg/m², a tensile strength (lengthways) of 43 kgf (25mm GRAB) and a tensile strength (widthways) of 66 kgf (25mm GRAB). Its flammability complies with British Standard BS3121.

### Methodology

The sheet was used to promote grass germination outdoors as follows:
1. The ground was prepared in the usual way for sports fields by raking and spiking. Topsoil was added if necessary;
2. Grass seed was raked in with the soil so that as much seed as possible was retained in the holes made by the spiker;
3. The area was then covered with the TILDENET GPC sheet and the sheet secured by means of pegs passing through holes provided around the perimeter of the sheet at approximately 100cm intervals, the holes being strengthened with brass eyelets in conventional manner;
4. The area was watered regularly over the sheet. Moisture passing through the sheet was retained by the sheet construction, so reducing loss by evaporation;
5. The sheet was kept in place until most of the seed had started to germinate (i.e. until the new young grass has begun to grow), normally within about 8-10 days depending on the climate and the type of seed.

The sheet has additional properties of shading the new grass, and protecting it from frost damage, and may therefore be kept in place if extremes of temperature are forecast.

### Test Results

### A. Comparative trials

Trials have yielded the following results:

| **Germination time** | |
|---|---|
| seeded area covered with TILDENET GPC | seeded area uncovered |
| 8 days* | 18 days |

| | |
|---|---|
| * Particularly uniform grass growth reported. The seeded areas were adjacent and exposed to the same treatment and weather. | |

### B. Seasonal tests

TILDENET GPC has achieved successful germination in England in late autumn and early spring, so extending reseeding periods towards the winter months. It is believed that the sheet has an insulating effect on the grass seed beneath it.

### C. Difficult Ground

TILDENET GPC has been found to be especially effective on hard compacted areas where otherwise it would be very difficult to produce uniform grass growth.

### D. Other advantages

TILDENET GPC:
a) is lightweight, rot-proof, tear-resistant and hard-wearing;
b) protects the seed from pests such as birds and rabbits as well as from wind damage; and
c) can give more uniform grass growth (especially; on hard compact earth) than hitherto, and improved matting of the resulting growth.

## Claims

1. A method for promoting the germination of seed, which comprises covering the sown seed with a foraminous germination-promoting sheet formed of intertwined strips and/or fibres of substantially water-impermeable material and having a mesh density greater than about 65%.

2. A method according to claim 1 for promoting the germination of grass seed.

3. A method according to claim 1 or claim 2, wherein the sheet is laid on the earth after sowing the seed.

4. A method according to any one of the preceding claims, wherein the sheet is used outdoors and is kept in position under natural sunlight, temperature and rainfall conditions, optionally with additional artificial irrigation, for a desired length of time.

5. A method according any one of the preceding claims, wherein the mesh density of the sheet is between about 80% and about 90%.

6. A method according to any one of the preceding claims, wherein the dimensions of the foramina of the sheet are chosen to enable a proportion of any water falling on the sheet to be retained in the foramina.

7. A method according to claim 6, wherein the dimensions of the foramina are up to about 5 mm.

8. A method according to any one of the preceding claims, wherein the sheet is constructed from a parallel array of backbones of knitted fibres, through and between which are intertwined strips of the required numbers and density to provide the desired mesh density.

9. A method according to any one of the preceding claims, wherein the sheet is formed of polyethylene strips and/or fibres intertwined in a knitted lockstitch arrangement.

## Patentansprüche

1. Eine Methode zur Förderung des Keimens von Samen, die darin besteht den ausgesäten Samen mit einer foraminen, keimungsfördernden Plane abzudecken, geformt aus verschlungenen Streifen und/oder Fasern aus im wesentlichen wasserundurchlässigem Material und mit einer Maschendichte größer als 65%.

2. Eine Methode, gemäß Anspruch 1 zur Förderung des Keimens von Grassamen.

3. Eine Methode, gemäß Anspruch 1 oder Anspruch 2, wonach die Plane auf die Erde gelegt wird, nach der Aussaat des Grassamens.

4. Eine Methode, gemäß eines jeden der vorangegangenen Ansprüche, wonach die Plane im Freien verwendet wird und an Ort und Stelle bleibt, unter natürlichen Sonnenlicht-, Temperatur- und Regenfallbedingungen, wahlweise mit zusätzlicher, künstlicher Bewässerung, über einen gewünschten Zeitraum hinweg.

5. Eine Methode, gemäß eines jeden der vorangegangenen Ansprüche, wonach die Maschendichte der Plane zwischen ungefähr 80% und ungefähr 90% liegt.

6. Eine Methode, gemäß eines jeden der vorangegangenen Ansprüche, wonach die Abmessungen der Foramina der Plane so gewählt werden, daß sie erlauben, daß ein Teil jedweden Wassers das auf die Plane fallt in den Foramina zurückgehalten wird.

7. Eine Methode, gemäß Anspruch 6, wonach die Abmessungen der Foramina bis zu ungefähr 5mm sind.

8. Eine Methode, gemäß eines jeden der vorangegangenen Ansprüche, wonach die Plane aus einer parallelen Anordnung von Rückgraten aus gewirkten Fasern konstruiert ist, durch die verschlungene Streifen gehen, und zwischen denen sich verschlungene Streifen befinden, von der erforderlichen Anzahl und Dichte, um die gewünschte Maschendichte zu liefern.

9. Eine Methode, gemäß eines jeden der vorangegangenen Ansprüche, wonach die Plane aus Pplyäthylenstreifen und/oder Fasern, verschlungen in einer gewirkten Steppstich-Anordnung, geformt ist.

## Revendications

1. Une méthode pour la promotion de la germination des graines, qui consiste à recouvrir les graines semées d'une bâche de promotion de la germination dotée de petites ouvertures et formée de bandes et/ou de fibres entrelacées de matériau substantiellement imperméable à l'eau et dont la densité de maille est supérieure à environ 65%.

2. Une méthode, selon la revendication 1, pour la promotion de la germination des graines d'herbe.

3. Une méthode, selon les revendications 1 ou 2, selon laquelle la bâche est déposée sur la terre après y avoir semé des graines.

4. Une méthode, selon l'une ou l'autre des revendications précédentes, par laquelle la bâche est utilisée à l'extérieur et est maintenue en position à la lumière naturelle, et en fonction de température et de conditions de pluie naturelles, et éventuellement, bénéficiant d'une irrigation artificielle supplémentaire pour une durée de temps souhaitée.

5. Une méthode selon l'une ou l'autre revendication précédente la densité de maille de la bâche se situe entre 80% environ et 90% environ.

6. Une méthode selon l'une ou l'autre des revendications précédentes, les dimensions des petites ouvertures de la bâche sont choisies de façon à permettre à une proportion donnée de toute eau tombant sur la bâche d'être conservée dans les petites ouvertures.

7. Une méthode selon la revendication 6, par laquelle les petites ouvertures peuvent atteindre une dimension allant jusqu'à 5 mm environ.

8. Une méthode selon l'une ou l'autre des revendications précédentes par laquelle la bâche est fabriquée au moyen d'un réseau parallèle de structures de fibres tricotées et entrecroisées qui constituent des bandes entrelacées du nombre et de la densité exigés pour assurer la densité de maille désirée.

9. Une méthode selon l'une ou l'autre des revendications précédentes, par laquelle la bâche est formée de bandes et/ou de fibres polyéthylène entrelacées en un agencement de malles au point de navette.
